# EUROPEAN PATENT SPECIFICATION

(11) **EP 1 421 015 B1**
(45) Date of publication and mention of the grant of the patent: **11.10.2006**
(21) Application number: 02760235.8
(22) Date of filing: 10.07.2002
(51) Int. Cl.: B65D 81/34, B65D 75/58, B65D 75/30, C08L 23/08

(54) **MICROWAVEABLE VACUUM SKIN PACKAGE**
MIKROWELLENERHITZBARE VAKUUMHAUTVERPACKUNG
CONDITIONNEMENT PELLIPLAQUE SOUS VIDE POUVANT PASSER AU FOUR A MICRO-ONDES

(30) Priority: 31.08.2001 EP 01120965
(43) Date of publication of application: 26.05.2004
(73) Proprietor: Cryovac, Inc., Duncan, S.C. 29334 (US)
(72) Inventor: DELLA BIANCA, Serena, I-20017 RHO (IT); GALLO, Francesco, I-20017 RHO (IT); COMINETTI, Marzia, I-20017 Passirana di Rho (IT)
(74) Representative: De Carli, Elda
(86) International application number: PCT/EP2002/007686
(87) International publication number: WO 2003/020608

(56) References cited:
- EP-A- 0 855 348
- EP-A- 0 887 285
- EP-A- 1 122 189
- WO-A-00/78545
- WO-A-99/54398
- US-A- 5 547 752
- US-A- 5 631 036

## Description

The present invention relates to a vacuum skin package suitable for the presentation and preservation of a food product and suitable for use in cooking, re-heating and/or thawing the packaged food product in a microwave oven.

More particularly the present invention refers to a self-venting microwaveable vacuum skin package where the packaged food product can be cooked, re-heated or thawed in the package without prior removal of the top web or without prior manual opening of the package.

A wide variety of products, especially food products like meat, sausages, cheese, ready meals, and the like, are being offered in visually attractive packages made from two thermoplastic webs using the vacuum skin packaging process.

Vacuum skin packaging (VSP) is a process well known in the art for using a thermoplastic packaging material to enclose a food product. The vacuum skin packaging process is in one sense a type of thermoforming process in which an article to be packaged serves as the mold for the forming web. An article may be placed on a rigid or semi-rigid support member, that can be flat or shaped, e.g., tray-shaped, bowl-shaped or cup-shaped, and the supported article is then passed to a chamber where a top web is drawn upward against a heated dome and the softened top web is then draped over the article. The movement of the web is controlled by vacuum and or air pressure, and in a vacuum skin packaging arrangement, the interior of the container is vacuumized before final welding of the top web to the support web. In a vacuum skin package the upper heated film thus forms a tight skin around the product and is sealed to the support.

Skin packaging is described in many references, including French Patent No. 1,258,357, French Patent No. 1,286,018, Australian Patent No. 3,491,504, U.S. Pat. No. RE 30,009, U.S. Pat. No. 3,574,642, U.S. Pat. No. 3,681,092, U.S. Pat. No. 3,713,849, U.S. Pat. No. 4,055,672, and U.S. Pat. No. 5,346,735. U.S. Pat. No. 5,346,735.

The term "vacuum skin packaging" (hereinafter "VSP") as used herein indicates that the product is packaged under vacuum and the space containing the product is evacuated from gases. It is therefore desirable that both the top skin film formed around the product and that used for the support member present a barrier to oxygen, air, and other gases detrimental to the shelf or storage life of a food product. Another key requirement for the skin packaging material in the VSP process, is a high degree of formability/stretchability to avoid a common and recurrent problem in such operations which is the occurrence of wrinkles and other irregularities in the final packaged product.

Typically, skin packaging provides just a barrier film that upon removal from the package leaves the product exposed to atmosphere, which is sufficient for certain types of applications.

When the packaged food product needs to be thawed and/or cooked or re-heated before eating, this is generally done by using a microwaveable support member, typically tray-shaped, and removing the top skin web just before putting the tray in the oven. Food treated in this way however tends to become dry in texture and consistency rather than tender and moist. Furthermore when the product to be thawed and/or cooked, or re-heated, contains some sort of sauce or juice, e.g. oil, butter, wine, seasoning or marinating liquid, etc., this will splatter on the inner surfaces of the microwave oven. The possibility of putting the package into the oven without removing the top skin lid would therefore be highly appreciated. By keeping the lid on top of the product in the microwave oven the food products will be cooked in an healthy manner, e.g. by steaming, and the oven inner surfaces will be kept clean. Furthermore, by removing the top skin only when the package is removed from the microwave oven, it will be possible to use the bottom support as a disposable dish for serving the product.

In any case, whether the food product is a raw or a cooked product and has to be cooked or just heated, considerable water vapour pressure is generated within the package during the heating cycle. While cooking or heating under a slight overpressure of vapour improves the taste and texture of the end product, a too high overpressure within the package should be avoided to ensure against sudden explosions of the packages within the oven. This particularly with VSP packages as the top and bottom webs are sealed together over a wide area (corresponding to the whole support surface not occupied by the product) and because the skin top web is highly formable and will therefore be overstretched by the excess vapour creating a balloon over the product before either bursting of the film or opening of the seal to release the excess vapour. This is a particularly negative effect for the VSP packages because, when the package is removed from the oven at the end of the cooking or heating step, the overstretched film will drape down over the cooked product giving an unpleasant appearance to the package.

In general the control of the pressure in the ovenable packages is achieved by creating at least one venting hole just before cooking, either by piercing the top lid of the package before inserting it in the oven or by removing the protective label covering the venting hole created during the packaging step. Alternatively the sealed area is of limited width, as in EP-A-855,348 where a self-venting microwaveable pouch is closed by means of an easy openable sealing tape covering the juncture between the folded over pouch edges, or it is narrowed in a limited zone to create there a weakness in the seal so that the seal will open up in that zone upon the generation of the overpressure.

These alternatives would not be possible or fit easily a VSP package.

The venting hole should in fact be positioned in that part of the top web that covers the food product as otherwise the presence of a venting hole would be immaterial if the top web is sealed to the bottom one. Creating such a venting hole in the package, by piercing the top skin, may damage the packaged product, while creating the hole in the top web before packaging may give problems during the stretching step as the web may tear starting from the hole.

The method described in EP-A-856,348 could not be used with a VSP package just because of the particular nature of the package that does not present a "mouth" or a "slit" to be closed, and also reducing the area of the seal in a controlled manner is difficult in a VSP package as the area where the top web is sealed to the bottom one is large and varies widely depending on the size of the support and of the product.

It has now been found that if a food product is packaged in a VSP package made with microwaveable thermoplastic materials and the peel strength between the top skin web and the bottom support web is comprised between about 2.0 and about 4.0 N/25.4 mm, it is possible to thaw and/or cook, or re-heat, the packaged product in a microwave oven without the need of removing, loosening or perforating the top lid before putting the package into the oven, without any risk of explosion and avoiding any substantial stretching of the top skin web. The top skin web in fact will raise over the product by the pressure of the vapour released by the product or by the sauce accompanying the product but it will not be overstretched because a channel for the excess vapour to vent off will then be created, between the top skin and the bottom webs, from the packaged product to the outermost edge of the package. The top skin will remain raised over the product until the heating is on, allowing the steaming of the product, and will then return to its original position as soon as the heating is over.

A first object of the present invention is therefore a self-venting microwaveable VSP package where a food product is vacuum skin packaged between a microwaveable rigid or semi-rigid support member, that can be flat or shaped, e.g., tray-, cup- or bowl-shaped, and a microwaveable top skin web which is draped over the food product, wherein the peel strength between the support member and the top skin web is comprised between about 2.0 and about 4.0 N/25.4 mm.

A second object of the present invention is a method of thawing and/or cooking, or re-heating a food product in a microwave oven comprising the step of
- packaging the food product in a VSP package where the food product is enclosed between a microwaveable rigid or semi-rigid support member and a microwaveable top skin web wherein the peel strength between the support member and the top skin web is comprised between about 2.0 and about 4.0 N/25.4 mm, and
- placing the package into the microwave oven to cause the radiant energy of the microwave oven to thaw and/or cook, or re-heat the food product as desired, without the need of creating or setting free a venting hole in the package and without removing or loosening the top skin film before putting the package into the oven.

### DETAILED DESCRIPTION OF THE INVENTION

In its first aspect the present invention relates to a self-venting microwaveable package of food product comprising
a) a rigid or semi-rigid, flat or shaped, support member;
b) a food product loaded onto the support a), and
c) a flexible thermoplastic film enclosing the food product on the support member, said flexible film being draped over the food product, by vacuum and/or air pressure, in a vacuum skin packaging arrangement, substantially conforming to the shape of the food product and being sealed to the support member outside the periphery of the food product;
said package being characterized in that the support member a) as well as the flexible film c) are of microwaveable thermoplastic materials and the peel strength between the support member a) and the flexible film c) is comprised between about 2.0 and about 4.0 N/25.4 mm.

In a preferred embodiment said peel strength is comprised between about 2.0 and about 3.5 N/25.4 mm, and in a more preferred embodiment it is comprised between about 2.0 and about 3.0 N/25.4 mm.

Typically the packaging materials to be used for the bottom support (or "lower web") and for the top skin (or "upper web" or "forming web") would be multi-layer structures, containing at least one layer with gas-barrier properties. While the bottom support needs to be rigid or semi-rigid and, in case it is shaped, also easily thermoformable, the top skin needs to be a flexible film endowed with a sufficient stretchability for use in a VSP process.

As used herein the term "microwaveable", as well as the term "microwave-compatible", when referred to the structures useful for the manufacture of the VSP package of the present invention, include those structures that are "substantially microwave-transparent" as well as those that are "microwave-active". While the structures substantially microwave-transparent are those capable of being crossed by at least 80%, preferably at least 90% of the microwaves generated by a microwave oven without any sort of interference therewith, the microwave-active are those that incorporate microwave reflective components intended to modify the energy deposition within the adjacent foodstuff. To be "microwaveable" in both cases, under the conditions of use, the packaging material should not be degraded or deformed and it should not release more than 60 ppm of global contaminants to the packaged food in contact therewith. In practice, packaging materials that withstand a heat treatment at 121 °C for ½ hour (conditions that are drastic enough not to be reached normally in microwave cooking) without deforming and releasing less than 60 ppm of contaminants, are considered to be "microwaveable" according to most of the food laws. Examples of resins suitable for use in the manufacture of the package of the invention include polyolefins (such as propylene-based polymers or preferably cross-linked polyethylene-based polymers), polyesters, nylons and any other thermoplastic material that under the conditions of use will not be altered by microwaves.

There are several mechanisms by which the required limited peel strength can be achieved in the VSP package of the invention.

In a first one, this is obtained by suitably selecting bottom and top webs with sealing layers that upon application of a force of between about 2.0 and about 4.0 N/25.4 mm would separate at their interface ("peel" one from the other). This can be obtained by suitably selecting resins or resins blends for said sealing layers of a sufficiently different chemical nature.

In a second mechanism this is achieved by using in at least one of the bottom and top webs a thin sealing layer and an adjacent layer of a thermoplastic material suitably selected in such a way that the bond between the sealing layer and said adjacent layer is very low. A typical example is a system where either the upper or the lower web comprises a very thin layer of polyethylene adjacent to a polyamide surface. The vapour pressure that generates in the package breaks through the thin polyethylene sealing layer and the low bond between polyethylene and polyamide then permits delamination between these two layers to take place giving the opening up of the package. The peel strength in this case is directly related to the bond between the sealing layer and the adjacent layer and accordingly it depends primarily on the chemical similarity or dissimilarity of the two materials. However, the extrusion conditions such as pressure, temperature and time of contact between the molten materials also have a major effect on the final bond strength between these two layers.

In a third mechanism, the desired limited peel strength is obtained by using in the seal layer, or in the layer adjacent to a very thin seal layer, of one of the two webs, a resin blend that has a low cohesive strength. In such a case the vapour generated during the cooking cycle will internally break said layer along a plane parallel to the layer itself, with or without prior breakage of the thin sealing layer, giving the opening up and the venting of the package. In this case the value of the peel strength will depend on the type of material selected for the low cohesion layer.

In a preferred embodiment the VSP package of the present invention is obtained by using a bottom support web containing, as the layer adjacent to a thin sealing layer, a low cohesion layer combined with any type of top skin web that seals to the bottom sealing layer.

Blends with low cohesive strength that can be used to obtain the desired limited peel strength are for instance those described in WO 99/54398, comprising a copolymer of ethylene and acrylic acid or methacrylic acid, a modified EVA copolymer, and a polybutylene.

A new blend that also provides for the desired low peel strength is based on the high vinyl acetate content EVA copolymers, such as those containing from more than 40 to about 80 % by weight of vinyl acetate, e.g. those currently sold by Bayer as Levamelt^{™} grades. Said blend would typically comprise from about 30 to about 70 wt. % of a high vinyl acetate content EVA, from about 15 to about 50 wt. % of a polybutene, and from about 15 to about 50 wt. % of an optionally neutralised ethylene-acrylic or methacrylic acid copolymer. It has been found that with the use of this blend, it is possible to lower the peel strength without impairing the manufacturing process.

For this blend, the preferred grade of high vinyl acetate EVA copolymer, would be the grade with the highest vinyl acetate content still approved for the packaging of food products. The wt. % of the EVA copolymer in the blend is at least 30 %, but preferably at least 35 %, and more preferably at least 40 %. Preferably the Melt Flow Index (MFI are measured under the conditions of ASTM D 1238 at 190 °C and 2.16 kg) of the EVA copolymer is higher than 10 g/10 min, more preferably higher than 15 g/10 min.

The ethylene-acrylic or methacrylic acid copolymer typically contains from about 4% to about 18% by weight of acrylic or methacrylic acid units. Said copolymer can also contain, copolymerized therein, an alkyl acrylate or methacrylate, such as n-butyl acrylate or methacrylate or isobutyl acrylate or methacrylate. Said copolymer can be in the free acid form as well as in the ionized or partially ionized form wherein the neutralizing cation can be any suitable metal ion, e.g. an alkali metal ion, a zinc ion, or other multivalent metal ions; in this latter case the copolymer is also termed "ionomer". Preferably the ethylene acrylic or methacrylic acid copolymer is an ionomer. Suitable polymers are those having a low melt flow index of less than 5 g/10 min and more preferably less than 2 g/10 min (still evaluated according to ASTM D 1238 at 190 °C and 2.16 kg). The wt. % of this component in the blend is at least 15%, preferably at least 20 % and even more preferably at least 25 %.

The polybutene used in said blend can be a homopolymer consisting essentially of a butene-1, butene-2, isobutene repeating units as well as a co-polymer such as an ethylene-butene copolymer. The polybutene component is contained in the new blend in an amount of at least 15 wt. %, preferably at least 20 wt. %.

The blend is simply obtained thoroughly mixing the three components in pellet form and then melt extruding it.

In the preferred embodiment where the bottom support web contains a thin sealing layer and a low cohesion layer adjacent thereto, the thickness of the low cohesion layer is preferably in the range of from about 2 to about 30 µm while the thickness of the seal layer is in the range of from about 1 µm up to about 7 µm, preferably up to 6 about µm and even more preferably up to 5 about µm.

In this preferred embodiment where the low cohesion layer is not the sealing layer, this latter one preferably comprises a polyolefin. More preferably it comprises at least one member selected from the group consisting of ethylene-α-olefin copolymers, low density polyethylene (LDPE), medium density polyethylene (MDPE), high density polyethylene (HDPE), ethylene-acrylic acid copolymers (EAA), ethylene-methacrylic acid copolymers (EMAA), ethylene-vinyl acetate copolymers (EVA) and ionomers. Even more preferably it comprises ionomer or EVA.

The thickness of the overall sheet used as the bottom support is not critical at all and will depend on the type of application foreseen. It will typically have a thickness up to about 1,200 µm, preferably up to about 1,000 µm, generally comprised between about 200 and about 750 µm.

Thinner films, e.g. from about 50 to about 200 µm, are employed as top skin webs. Said films will contain a sealing layer that would seal to the sealing layer of the bottom support web. Typically ethylene-α-olefin copolymers, EAA, EMAA, EVA and preferably ionomers are employed for the sealing layer.

Both the bottom support web and the top skin webs preferably contain a gas-barrier layer. The gas-barrier layer generally includes a polymeric material with low oxygen transmission characteristics, such as PVDC, EVOH, polyamides, polyesters or blends thereof.

PVDC is any vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally a PVDC barrier layer will contain plasticisers and/or stabilizers as known in the art.

EVOH is the saponified product of ethylene-vinyl ester copolymers, generally of ethylene-vinyl acetate copolymers, wherein the ethylene content is typically comprised between 20 and 60 % by mole and the degree of saponification is generally higher than 85 % preferably higher than 95 %.

Polyamides used as gas barrier layer can be homo- or co-polyamides. This term specifically includes those aliphatic polyamides or copolyamides commonly referred to as e.g. polyamide 6 (homopolymer based on ε- caprolactam), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on ε-caprolactam and hexamethylenediamine and adipic acid), polyamide 66/610 (polyamide copolymers based on hexamethylenediamine, adipic acid and sebacic acid), modifications thereof and blends thereof. Said term also includes crystalline or partially crystalline, aromatic or partially aromatic, polyamides.

The thickness of the gas barrier layer will be suitably selected in order to provide the overall structure with an oxygen transmission rate (evaluated by ASTM D3985) of less than 150 cm³/m².atm.d, at room temperature and 0 % relative humidity, preferably of less than 100, and even more preferably of less than 50 cm³/m².atm.d.

Other layers can be present in both the bottom support and the top skin webs. Said additional layers should serve the purpose of providing the necessary bulk to the sheets and improving their mechanical properties, i.e. increased puncture resistance, increased abuse resistance, etc., or to better tie the various layers one to the other. Any type of microwaveable resin can be employed for these purposes.

For the evaluation of the peel strength the following internal standard procedure has been employed : strips of 25.4 mm in width and 300 mm in length are cut from mock VSP packages prepared starting from the suitably selected upper and lower webs sealed together in a VSP packaging cycle (e.g., using a MULTIVAC® CD 6000 machine) under the setting conditions of actual use; manually separate the upper and lower webs until the lower web may be fixed into the lower clamp of a dynamometer, and the upper web into the upper one, taking care that the area to be tested lies in the middle of the two clamps and that an adequate tensioning between the two extremities of the fixed sample is obtained; the peel strength is then measured with a crosshead speed of 200 mm/min and a jaw distance of 30 mm.

In another aspect the present invention relates to a method of thawing and/or cooking, or re-heating a food product in a microwave oven comprising the step of
- packaging the food product in a VSP package where the food product is enclosed between a microwaveable rigid or semi-rigid support member and a microwaveable top skin web wherein the peel strength between the support member and the top skin web is comprised between about 2.0 and about 4.0 N/25.4 mm, and
- placing the package into the microwave oven to cause the radiant energy of the microwave oven to thaw and/or cook, or re-heat the food product as desired, without the need of creating or setting free a venting hole in the package and without removing or loosening the top skin film before putting the package into the oven.

The VSP package according to the present invention does not require any particular system for releasing the vapour overpressure during the microwave treatment. In particular no puncturing of the top web nor any loosening of the top web are needed. The package can just be put into the microwave oven as such and heated without any problem. At first the vapour released by the food product during the energy treatment will raise the top skin over the product thus creating a sort of vapour cushion around the product that maintains the product texture and taste and when the vapour pressure reaches the threshold value, then the package opens up and the excess vapour is vented off through the sort of channel that creates between the upper and lower webs of the packaging material. Still however during the cooking cycle a vapour cushion is maintained around the product. At the end of the cooking cycle, when no additional vapour is generated by the product, the top skin film lowers on top of the product with no wrinkles or plies as it has not been overstretched during the cooking cycle. The package can then be withdrawn from the oven, the top skin removed, and the food product can be served, if desired, directly on the bottom support. No particular care should be taken while removing the top skin film as the hot vapour has been vented off during the cooking cycle.

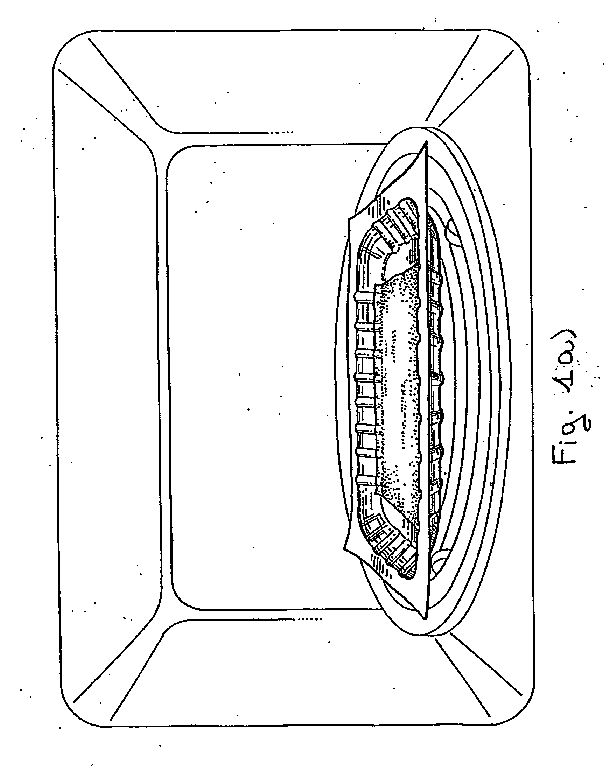

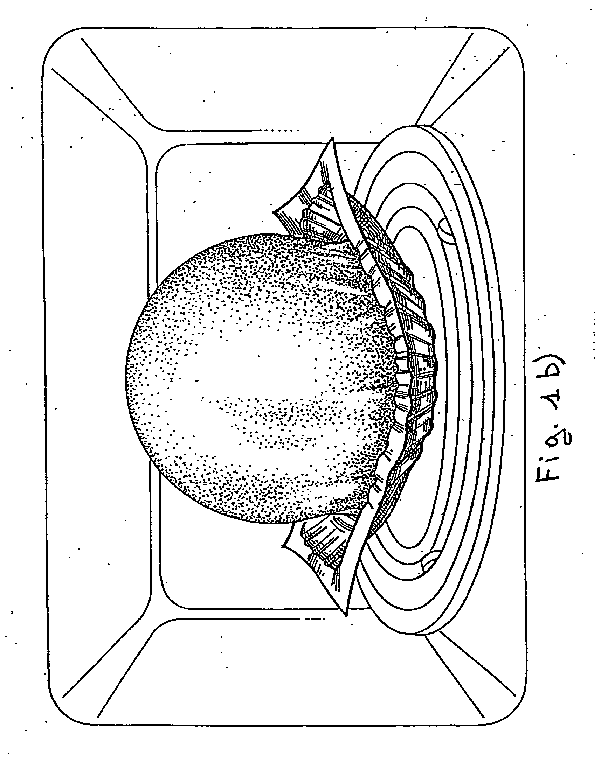

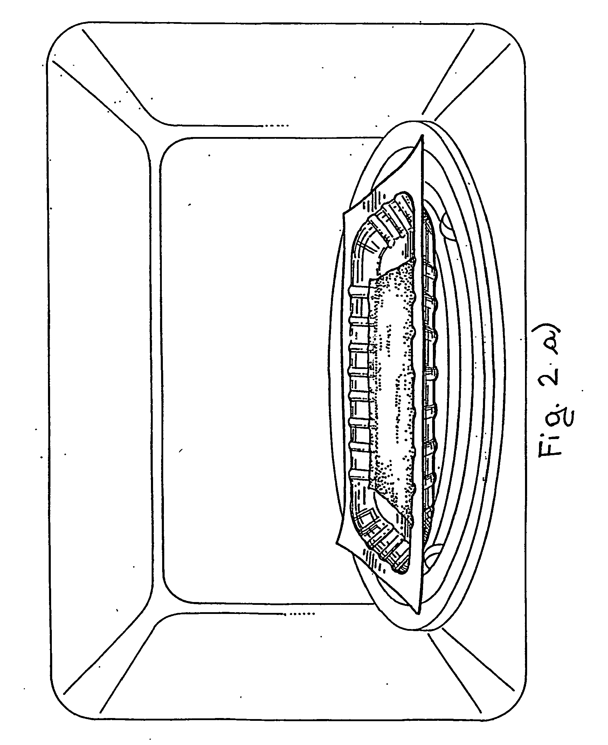

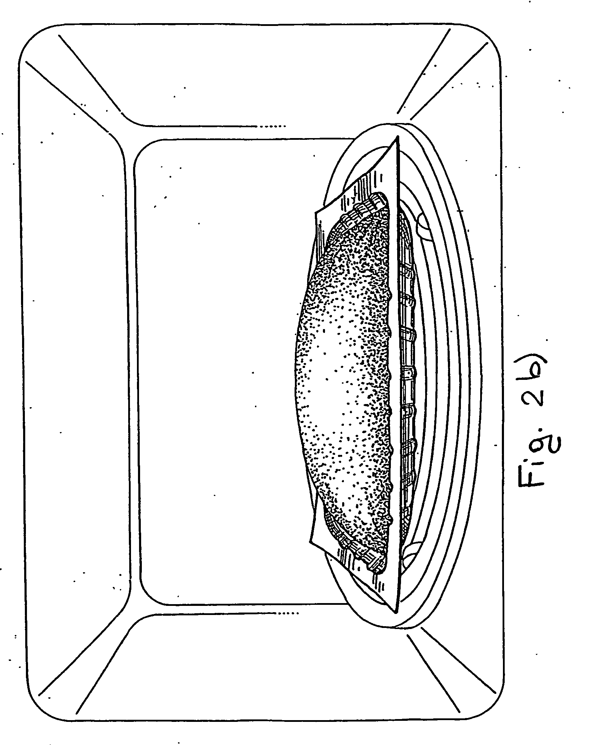

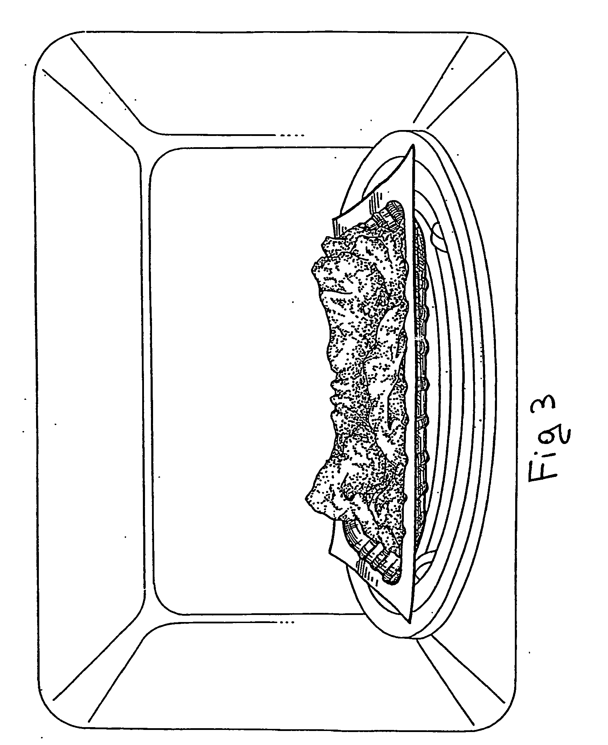

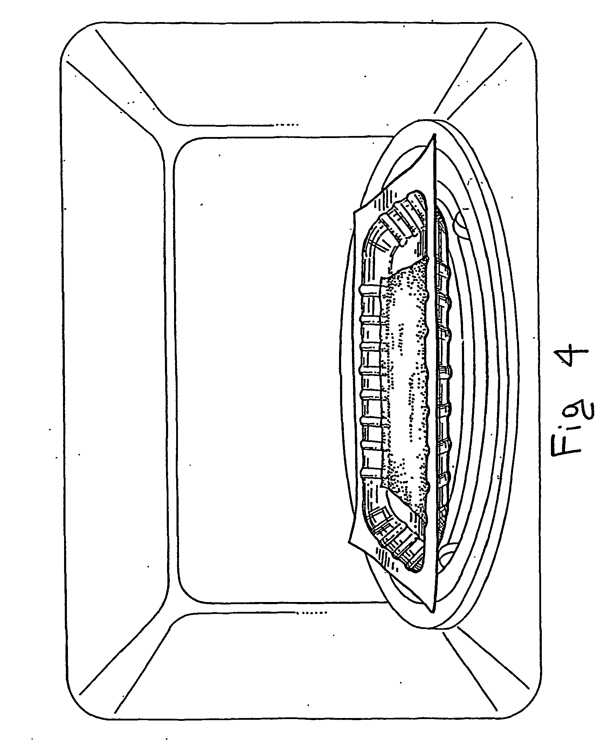

Figure 1a) illustrates a conventional VSP package, with a peel strength of 5.3 N/25.4 mm, before the cooking cycle and Fig. 1b) illustrates the same package during the cooking step with the top skin ballooning clearly visible. Fig. 2a) illustrates a VSP package of the present invention, with a peel strength of 2.4 N/25.4 mm, before the cooking cycle (Fig. 2a) no different from Fig. 1a)) and Fig. 2b) shows the same package during the cooking cycle. Figg. 3 and 4 show the two types of packages after the cooking cycle where the photograph indicated as Fig. 3 is that of the conventional VSP package of Fig. 1a) and 1b) (clearly visible are the wrinkles that are generated by the overstretching of the top skin film during the heating step) and the photograph indicated as Fig. 4 refers to the package of the invention of Fig. 2a) and 2b). No wrinkles or plies can be noticed with the VSP package according to the present invention.

More particularly the structure of the bottom support web and that of the top skin web of the package according to the present invention shown in Figg. 2a), 2b), and 4, are the following ones (the partial thickness of the various layers - in µm - is indicated between parentheses) :

### Bottom support web

- Ionomer (based on ethylene-methacrylic acid copolymer) - Surlyn® 1705-1 by DuPont- Sealant layer (4)
- Blend of
   - 40 % EVA with 45 % VA with MFI in the range 15-35 g/10 min (ASTM D1238 - 190 °C and 2.16 kg) - Levamelt^{™} L456 by Bayer,
   - 30 % of polybutylene with MFI = 20 g/10 min (ASTM D1238 190°C and 2.16 kg) - Shell polybutene 0400 by Shell, and
   - 30 % of ionomer with MFI = 1.3 g/10 min (ASTM D1238 190°C and 2.16 kg) - Surlyn® 1601 by DuPont
      Cohesive failure layer (12)
- Linear low density polyethylene modified with maleic anhydride - Tie layer (13)
- Low density polyethylene - Bulk layer (140)
- Linear low density polyethylene modified with maleic anhydride - Tie layer (10)
- Ethylene-vinyl alcohol copolymer - barrier layer (11)
- Linear low density polyethylene modified with maleic anhydride - Tie layer (13)
- Polypropylene - Outer abuse resistant layer (400)

### Top skin web

- Ionomer (based on ethylene-methacrylic acid copolymer) - Surlyn® 1702 by DuPont - Sealant layer (6)
- Low density polyethylene - Bulk layer (14)
- Ethylene-vinyl acetate copolymer with 19 % VA - Bulk layer (19)
- Linear low density polyethylene modified with maleic anhydride - Tie layer (3)
- Ethylene-vinyl alcohol copolymer - barrier layer (8)
- Linear low density polyethylene modified with maleic anhydride - Tie layer (3)
- Ethylene-vinyl acetate copolymer with 19 % VA-Bulk layer (11)
- Low density polyethylene - Bulk layer (26)
- High density polyethylene - Outer abuse resistant layer (10)

## Claims

1. A self-venting microwaveable package of food product comprising
a) a rigid or semi-rigid, flat or shaped, support member;
b) a food product loaded onto the support a), and
c) a flexible thermoplastic film enclosing the food product on the support member, said flexible film being draped over the food product, by vacuum and/or air pressure, in a vacuum skin packaging arrangement, substantially conforming to the shape of the food product and being sealed to the support member outside the periphery of the food product;
wherein the support member a) as well as the flexible film c) are of microwaveable thermoplastic materials and the peel strength between the support member a) and the flexible film c) is comprised between about 2.0 and about 4.0 N/25.4 mm:

2. The self-venting microwaveable package of claim 1 wherein the peel strength between the support member a) and the flexible film c) is comprised between about 2.0 and about 3.5 N/25.4 mm.

3. The self-venting microwaveable package of claim 2 wherein the peel strength between the support member a) and the flexible film c) is comprised between about 2.0 and about 3.0 N/25.4 mm.

4. The self-venting microwaveable package of claim 1 wherein the support member a) comprises as the sealing layer or as the layer adjacent to a thin sealing layer, a low cohesion layer.

5. The self-venting microwaveable package of claim 4 wherein the low cohesion layer is a layer adjacent to the sealing layer and the sealing layer has a thickness of up to 7, preferably 6, more preferably 5 µm.

6. A method of thawing and/or cooking, or re-heating a food product in a microwave oven comprising the step of
• packaging the food product in a VSP package where the food product is enclosed between a microwaveable rigid or semi-rigid support member and a microwaveable top skin web wherein the peel strength between the support member and the top skin web is comprised between about 2.0 and about 4.0 N/25.4 mm, and
• placing the package into the microwave oven to cause the radiant energy of the microwave oven to thaw and/or cook, or re-heat the food product as desired, without the need of creating or setting free a venting hole in the package and without removing or loosening the top skin film before putting the package into the oven.

7. The method of claim 6 wherein the peel strength between the support member and the top skin web is comprised between about 2.0 and about 3.5 N/25.4 mm.

8. The method of claim 7 wherein the peel strength between the support member and the top skin web is comprised between about 2.0 and about 3.0 N/25.4 mm.

9. The self-venting microwaveable package of claims 4 or 5 wherein the low cohesion layer comprises a blend comprising from about 30 to about 70 wt. % of an EVA copolymer containing from more than 40 to about 80 wt. % vinyl acetate, from about 15 to about 50 wt. % of a polybutene, and from about 15 to about 50 wt. % of an optionally neutralised ethylene-acrylic or methacrylic acid copolymer.

## Patentansprüche

1. Eine selbstentgasende, mikrowellengeeignete Nahrungsmittelproduktpackung umfassend
a) ein festes oder halbfestes, flaches oder geformtes Trägerelement,
b) ein auf den Träger a) aufgebrachtes Nahrungsmittelprodukt und
c) eine flexible thermoplastische Folie, die das Nahrungsmittelprodukt auf dem Trägerelement einschließt, wobei die flexible Folie durch Vakuum und/oder Luftdruck in einer Vakuumskinverpackungsanordnung über das Nahrungsmittelprodukt drapiert ist, im Wesentlichen an der Form des Nahrungsmittelprodukts anliegt und mit dem Trägerelement außerhalb des Randbereiches des Nahrungsmittelproduktes versiegelt ist,
wobei das Trägerelement a) sowie die flexible Folie c) aus mikrowellengeeigneten thermoplastischen Materialien sind und die Ablösefestigkeit zwischen dem Trägerelement a) und der flexiblen Folie c) zwischen etwa 2,0 und etwa 4,0 N/25,4 mm liegt.

2. Selbstentgasende mikrowellengeeignete Packung nach Anspruch 1, bei der die Ablösefestigkeit zwischen dem Trägerelement a) und der flexiblen Folie c) zwischen etwa 2,0 und etwa 3,5 N/25,4 mm liegt.

3. Selbstentgasende mikrowellengeeignete Packung nach Anspruch 2, bei der die Ablösefestigkeit zwischen dem Trägerelement a) und der flexiblen Folie c) zwischen etwa 2,0 und etwa 3,0 N/25,4 mm liegt.

4. Selbstentgasende mikrowellengeeignete Packung nach Anspruch 1, bei der das Trägerelement a) als Siegelschicht oder als an eine dünne Siegelschicht angrenzende Schicht eine Schicht mit geringer Kohäsion aufweist.

5. Selbstentgasende mikrowellengeeignete Packung nach Anspruch 4, bei der die Schicht mit geringer Kohäsion eine an die Siegelschicht angrenzende Schicht ist und die Siegelschicht eine Dicke von bis zu 7, vorzugsweise 6 und bevorzugter 5 µm aufweist.

6. Verfahren zum Auftauen und/oder Garen oder Aufwärmen eines Nahrungsmittelprodukts in einem Mikrowellengerät, bei dem
• das Nahrungsmittelprodukt in einer VSP-Packung verpackt wird, wobei das Nahrungsmittelprodukt zwischen einem mikrowellengeeigneten festen oder halbfesten Trägerelement und einer mikrowellengeeigneten Deckschichtbahn eingeschlossen ist, wobei die Ablösefestigkeit zwischen dem Trägerelement und der Deckschichtbahn zwischen etwa 2,0 und etwa 4,0 N/25,4 mm liegt, und
• die Packung in einem Mikrowellengerät angeordnet wird, damit die Strahlungsenergie des Mikrowellengeräts bewirkt, dass das Nahrungsmittelprodukt ohne die Notwendigkeit der Schaffung oder Freilegung eines Entgasungslochs in der Packung und ohne die Entfernung oder Lockerung der Deckschichtfolie vor dem Einbringen der Packung in das Gerät je nach Wunsch aufgetaut und/oder gegart oder aufgewärmt wird.

7. Verfahren nach Anspruch 6, bei dem die Ablösefestigkeit zwischen dem Trägerelement und der Deckschichtbahn zwischen etwa 2,0 und etwa 3,5 N/25,4 mm liegt.

8. Verfahren nach Anspruch 7, bei dem die Ablösefestigkeit zwischen dem Trägerelement und der Deckschichtbahn zwischen etwa 2,0 und etwa 3,0 N/25,4 mm liegt.

9. Selbstentgasende mikrowellengeeignete Packung nach Anspruch 4 oder 5, bei der die Schicht mit niedriger Kohäsion eine Mischung umfasst, die etwa 30 bis etwa 70 Gew.% eines EVA-Copolymers, das mehr als 40 bis etwa 80 Gew.% Vinylacetat enthält, 15 bis etwa 50 Gew.% eines Polybutens und etwa 15 bis etwa 50 Gew.% eines gegebenenfalls neutralisierten Ethylen-Acryl- oder -Methacrylsäurecopolymers umfasst.

## Revendications

1. Conditionnement pour produit alimentaire, à évacuation d'air automatique, pouvant passer au four à micro-ondes, comprenant
a) un élément de support rigide ou semi-rigide, plat ou profilé;
b) un produit alimentaire chargé sur le support a), et
c) un film souple thermoplastique enfermant le produit alimentaire sur l'élément de support, ledit film souple étant drapé autour du produit alimentaire sous vide et/ou pression d'air dans un dispositif de conditionnement moulant sous vide s'adaptant sensiblement à la forme du produit alimentaire et étant scellé à l'élément de support à l'extérieur de la périphérie du produit alimentaire;
dans lequel l'élément de support a) ainsi que le film souple c) sont faits dans des matériaux thermoplastiques pouvant passer au four à micro-ondes et la résistance au pelage entre l'élément de support a) et le film souple c) est comprise entre environ 2,0 et environ 4,0 N/25,4 mm.

2. Conditionnement à évacuation d'air automatique pouvant passer au four à micro-ondes, selon la revendication 1, dans lequel la résistance au pelage entre l'élément de support a) et le film souple c) est comprise entre environ 2,0 et environ 3,5 N/25,4 mm.

3. Conditionnement à évacuation d'air automatique pouvant passer au four à micro-ondes, selon la revendication 2, dans lequel la résistance au pelage entre l'élément de support a) et le film souple c) est comprise entre environ 2,0 et environ 3,0 N/25,4 mm.

4. Conditionnement à évacuation d'air automatique pouvant passer au four à micro-ondes, selon la revendication 1, dans lequel l'élément de support a) comprend une couche de faible cohésion comme couche de scellage ou comme couche adjacente à une mince couche de scellage.

5. Conditionnement à évacuation d'air automatique pouvant passer au four à micro-ondes, selon la revendication 4, dans lequel la couche de faible cohésion est une couche adjacente à la couche de scellage et la couche de scellage a une épaisseur allant jusqu'à 7 µm, de préférence 6 µm, de préférence 5 µm.

6. Procédé pour décongeler et/ou cuire ou réchauffer un produit alimentaire dans un four à micro-ondes comprenant les étapes consistant à:
- conditionner le produit alimentaire dans un conditionnement VSP (conditionnement moulant sous vide)
dans lequel le produit alimentaire est enfermé entre un élément de support rigide ou semi-rigide pouvant passer au four à micro-ondes et une bande de peau extérieure pouvant passer au four à micro-ondes, dans lequel la résistance au pelage entre l'élément de support et la bande de peau extérieure est comprise entre environ 2,0 et environ 4,0 N/25,4 mm, et
- placer le conditionnement dans le four à micro-ondes pour amener l'énergie radiante du four à micro-ondes à décongeler et/ou cuire ou réchauffer le produit alimentaire en fonction des besoins, sans avoir besoin de former ou de libérer un trou d'évacuation d'air dans le conditionnement et sans enlever ou détacher la bande de peau extérieure avant de mettre le conditionnement dans le four.

7. Procédé selon la revendication 6, dans lequel la résistance au pelage entre l'élément de support et la bande de peau extérieure est comprise entre environ 2,0 et environ 3,5 N/25,4 mm.

8. Procédé selon la revendication 7, dans lequel la résistance au pelage entre l'élément de support et la bande de peau extérieure est comprise entre environ 2,0 et environ 3,0 N/25,4 mm.

9. Conditionnement à évacuation d'air automatique pouvant passer au four à micro-ondes selon la revendication 4 ou 5, dans lequel la couche de faible cohésion comprend un mélange constitué d'environ 30% à environ 70% en poids d'un copolymère EVA (éthylène-acétate de vinyle) contenant entre plus de 40% et environ 80% en poids d'acétate de vinyle, entre environ 15% et environ 50% en poids d'un polybutène et entre environ 15% et environ 50% en poids d'un copolymère d'acide acrylique ou méthacrylique d'éthylène à neutralisation optionnelle.
